# EUROPEAN PATENT SPECIFICATION

(11) **EP 0 547 040 B1**
(45) Date of publication and mention of the grant of the patent: **29.05.1996**
(21) Application number: 93200584.6
(22) Date of filing: 29.11.1989
(51) Int. Cl.: B60C 11/11, B60C 11/04, B60C 9/20

(54) **Pneumatic radial tyre**
Radialer Luftreifen
Bandage pneumatique radial

(30) Priority: 30.11.1988 JP 302983/88; 30.11.1988 JP 302984/88; 30.11.1988 JP 302985/88; 30.11.1988 JP 302988/88; 30.11.1988 JP 302990/88
(43) Date of publication of application: 16.06.1993
(62) Divisional of application: 89312436.2
(73) Proprietor: SUMITOMO RUBBER INDUSTRIES LIMITED, Kobe-shi Hyogo-ken (JP)
(72) Inventor: Kajiwara, Shinzo, Tsuyama-shi, Okayama-ken (JP); Konii, Yoshio, Kobe-shi, Hyogo-ken (JP); Yanase, Minao, Kobe-shi, Hyogo-ken (JP)
(74) Representative: Stewart, Charles Geoffrey

(56) References cited:
- EP-A- 0 151 966
- EP-A- 0 157 716
- EP-A- 0 196 161
- EP-A- 0 237 462
- FR-A- 1 548 673
- FR-A- 2 388 685
- US-A- 4 730 654
- US-A- 4 819 704
- PATENT ABSTRACTS OF JAPAN vol. 13, no. 033 (M-789)25 January 1989 & JP-A-63 242 702 BRIDGESTONE CORP.) 7 October 1988

## Description

This invention relates to a pneumatic radial tyre, and more particularly to a pneumatic radial tyre of improved steerability for passenger cars.

Radial tyres are widely used to give good steering stability, ride comfort, wear rates and so on. However, tyres which are superior in a straight-forward driving performance by preventing drifting to one side of a car in order to increase the driving safety of a car are now being demanded. Conventionally, one-side drifting is considered to be caused by the so-called conicity in which the circumferential lengths of the belt layer in the right and left sides of the tyre are different from each other. Therefore, various methods have been tried to improve the homogeneity in the right and left directions of the tyres axis.

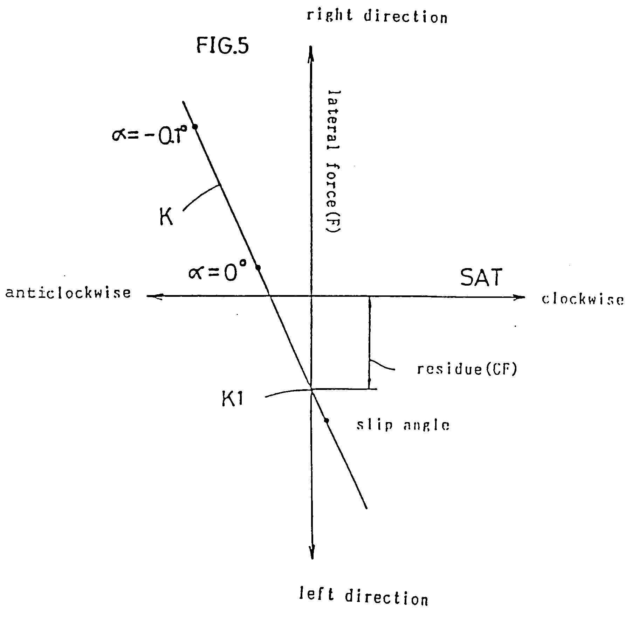

On the other hand, owing to the recent progress in tyre measurement techniques, as shown schematically in Fig.4, the cornering force, i.e. the lateral force F which is generated in the lateral direction Y of a tyre when a tiny slip angle (α) is given in the running direction X of the tyre and the self-aligning torque SAT which revolves in the direction of the slip angle (α) about the vertical axis Z that passes the centre of a tyre can be measured at a high precision.

Such measurement results are shown by curve K in Fig.5, by plotting the self aligning torque SAT on the axis of abscissas and the lateral torque F on the axis of ordinates. In the curve K, the cases when the slip angle (α) is 0 degrees, + 0.1 degrees or - 0.1 degrees are shown by dots.

From this relation of self-aligning torque SAT and lateral force F, the lateral force F at the crossing point K1 of the curve K and the axis of ordinates, that is, the lateral force F when the self-aligning torque SAT is not generated, can be derived and this is called the residue CF. It is the object of thus invention to provide a tyre which prevents one sided drifting of the car, improves straight line performance and has good aesthetic appeal.

The inventors have found that the residue CF is the tyre characteristic which affects the one-side drifting of the car. In other words, a car drifts to one side when the residue CF is in the plus direction. i.e. the right direction. Thus, the one side drifting characteristics of a car can be evaluated by the direction and the size of the residue CF. In order to prevent the one side drifting of a car, it is required to reduce the residue CF.

The residue CF is generated from the expansion and contraction of the belt in the ground contact zone. A shearing strain in a surface is created in the cross ply belt of a radial tyre by the parallel movement of the cords due to expansion and contraction. Thus the tread rubber generates a steering torque by a shearing in the surface generated together with the strain of the belt ply in the outermost layer of the belt. It is considered that the lateral force F is created by this steering torque. Thus it was found that the residue CF is caused by the belt and depends on the cords quantity of the belt and the inclination of the belt cords.

The cord quantity is defined as N x S which is the product of the total sectional area of one belt cord S (mm²) and the number of the belt cords N existing in 10cm in the right angled direction of the belt cords. The rigidity of the belt can be reduced by reducing the cord quantity N x S or by enlarging the inclination angle of the cords to the direction of the tyres equator. This reduces the hoop effect of the belt and the residue CF, thereby controlling the one side drifting of a car.

On the other hand, such a reduction of the rigidity of the belt can improve the ride comfort performance at the same time, which is a basic item required for a car.

Additional experiments were conducted for reduction of the residue CF in a tread having a relatively low belt rigidity. As a result, it was found that good results could be obtained by reducing the inclination of the lateral grooves crossing the circumferential grooves of the tread pattern, that is, positioning the lateral grooves closely in the direction of the tyres axis. However, such a tread pattern does not provide a sufficiently powerful image to customers, lacks aesthetic sense, and tends to decrease the marketability of the product.

In another approach it was found that by reducing the belt cord quantity and enlarging the inclination angle to the direction of the tyres equator, the hoop effect is reduced and the cornering force decreases especially upon turning, thus impeding the steering stability.

It is hence a primary object of the invention to provide a pneumatic radial tyre which prevents one side drifting of a car in driving, improves a straight forward driving performance and reduces the deterioration of steering stability.

In the first and second aspects, as described above, by setting the inclination angle of the lateral grooves to the direction of tyres axis at a small angle, the residue CF can be reduced in a tyre. However, in order to increase the product appeal and the marketability of a tyre, a tread pattern must appeal to the aesthetic sense of customers. But, a pattern of lateral grooves extending in a direction of tyres axis is often seen to lack powerfulness. Therefore, in order to increase the powerfulness, the inclination should be larger, but on the other hand, a larger inclination accompanies an increase of the residue CF. Therefore, it is required to meet these contradictory requirements.

In order to obtain compatibility of the steering stability with the one side drifting performance of a car, the present inventors continued further studies based on a conventional pneumatic radial tyre for passenger cars having rows of blocks formed by crossing the lateral grooves in a rib sectioned by plural circumferential grooves having a linear or zigzag shape which extends in a circumferential direction. As a result of the studies, it was found that the contribution rating of lateral grooves to the cornering performance of a tyre is small, and therefore, they hardly affect the steering stability.

Moreover, it was also discovered that the residue CF is reduced by forming the outer lateral grooves in the right and left outside area SL,SR in the reverse direction to the outside belt cords which are the belt cords of the outermost belt ply and with an inclination of 0 to 40 degrees to the direction of the tyre axis.

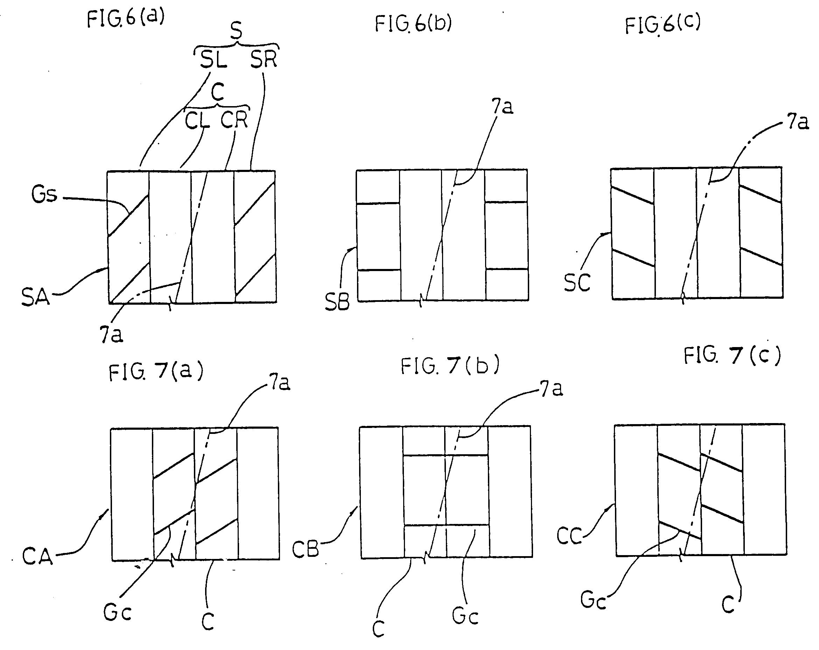

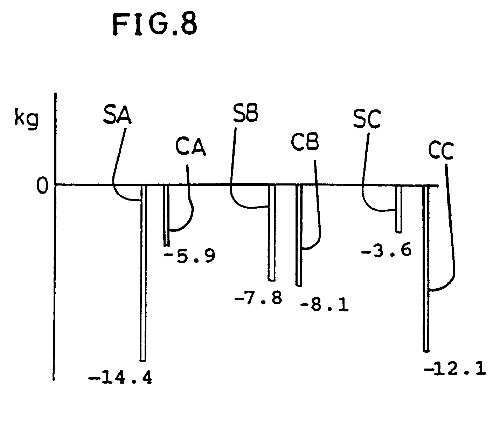

Prototypes of tyres SA, SB and SC having outer lateral grooves Gs in the outside area S in different directions were produced as shown in Figs 6(a) to (c). The outside belt cords 7a of the outermost belt ply are shown by single dotted broken lines in the Figures. In Fig.6 (a), the outer lateral grooves Gs are inclined in the same direction as the outside belt cords 7a. In Fig.6(b), they are formed in the direction of the tyres axis. In Fig.6 (c), they are formed in the reverse direction. The results of measuring the residue CF in such patterns as SA, SB and SC are shown in Fig.8. In the patterns SA, SB, and SC, the residue CF's are -14.4 kg, -7.8kg and -3.6 kg respectively. Thus, it was provided that the absolute value of residue CF of the pattern SC in which the outer lateral grooves Gs are constructed in a different direction to the outside belt cords 7a is reduced.

Fig.8 shows the residue CF in the cases of patterns CA, CB and CC from Fig.7. In the case of pattern CA the inner lateral grooves Gc are inclined in the same direction as the outside belt cords 7a in the inside area C, as shown in Fig. 7 (a). Figs 7(b) and (c) show the pattern CB in which they are inclined in the direction of the tyre axis and the pattern CC in which they are inclined in the reverse direction, respectively. The residue CFs are -5.9 kg -8.1 kg and -12.1 kg, respectively. The absolute value of the residue CF was thus reduced by inclining the inner lateral grooves in the same direction as the outside belt cords 7a.

Thus it was found that the residue CF can be reduced and the one side drifting performance of a car can be improved by inclining the lateral grooves in the reverse direction to the outside belt cords 7a in the outside area S and in the same direction in the inside area C.

Therefore, in the aspect of the invention, outer horizontal grooves Gs constructed in the outside area S are inclined in a different direction to the outside belt cords 7a and at 0 to 40 degrees to the direction of the tyres axis.

In addition lateral grooves are inclined in the same direction as the outside belt cords 7a and at an angle of 40 degrees or less to the direction of the tyres axis in the inside area C.

In the case that inner lateral grooves Gc having a larger inclination are constructed in the inside area C, the cornering force upon turning of a tyre generated especially when the slip angle (α) is 1 degree tends to be reduced. Therefore, in some cases, it is not preferable to form inner horizontal grooves Gc having a larger inclination angle.

Thus, it is required to impose the reducing effect of the residue CF caused by the inside area C on the outside area S.

The inventors considered that the residue CF could be controlled by 6 kg or less in absolute value by setting the circumferential pitch Ps at 20mm or less. Thus the cornering force generated when the slip angle (α) is 1 degree is larger and steering stability upon turning is improved without relying upon the inner lateral grooves Gc of the inside area C.

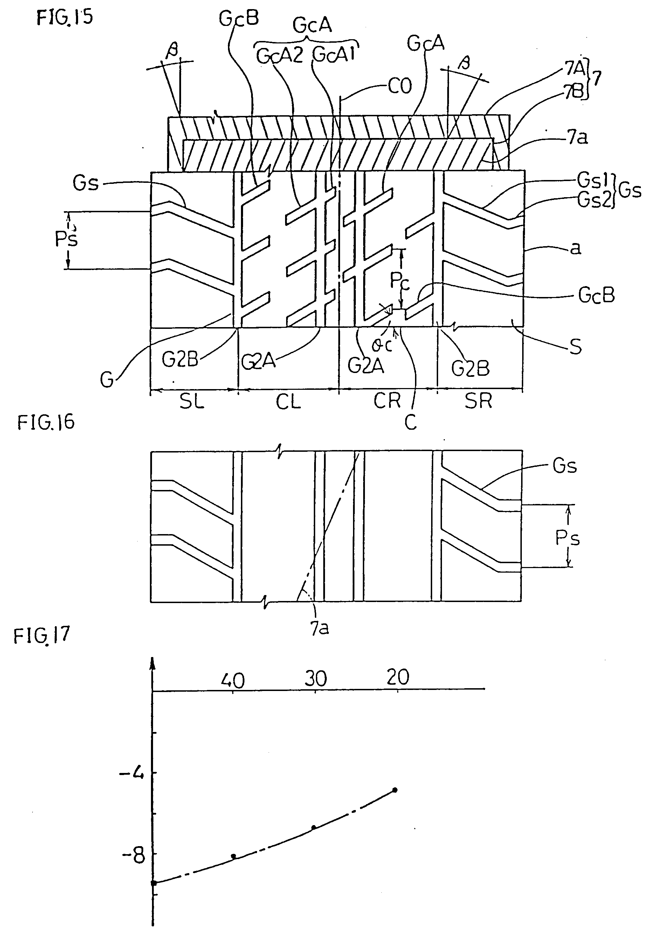

To do this they produced prototypes of tyres having different circumferential pitches Ps in the direction of the tyres equator between the outer lateral grooves Gs in the outside area S as shown in Fig 16, and the results of measuring the residue 6F as shown in Fig 17.

Thus, the circumferential pitch Ps is set at 20mm or less in this aspect of the invention.

Embodiments of the invention will be described in detail below, in conjunction with the attached drawings in which:-
Fig.1. is a sectional view showing an embodiment of the first invention;
Fig.2 is a sectional view of a belt ply;
Fig.3 is a sectional view showing an example of a belt cord;
Fig.4 is a perspective view explaining the residue CR;
Fig.5 is its diagram;
Figs. 6(a) to (c) and 6(a) to (c) are plan view showing patterns used in the experiments;
Fig.8 is a diagram showing the experimental results;
Fig.9 is a plan view showing the pattern of one embodiment of the invention;
Fig.10 is a plan view showing an example of a pattern for Fig.9;
Figs.11 to 13 are plan views showing other patterns;
Fig.14 is a plan view showing the pattern of a comparison example;
Fig.15 is a plan view showing the pattern of one of the embodiments of the fourth invention;
Fig.16 is a plan view showing an example of another pattern;
Fig.17 is a diagram showing the results of tests;
Figs. 18 and 19 are plan views showing other patterns respectively; and
Fig.20 is a plan view showing the pattern of a comparative example;

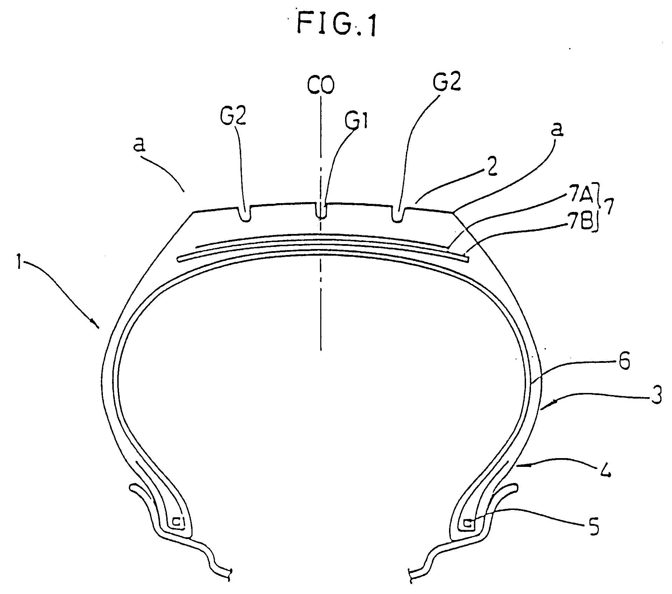

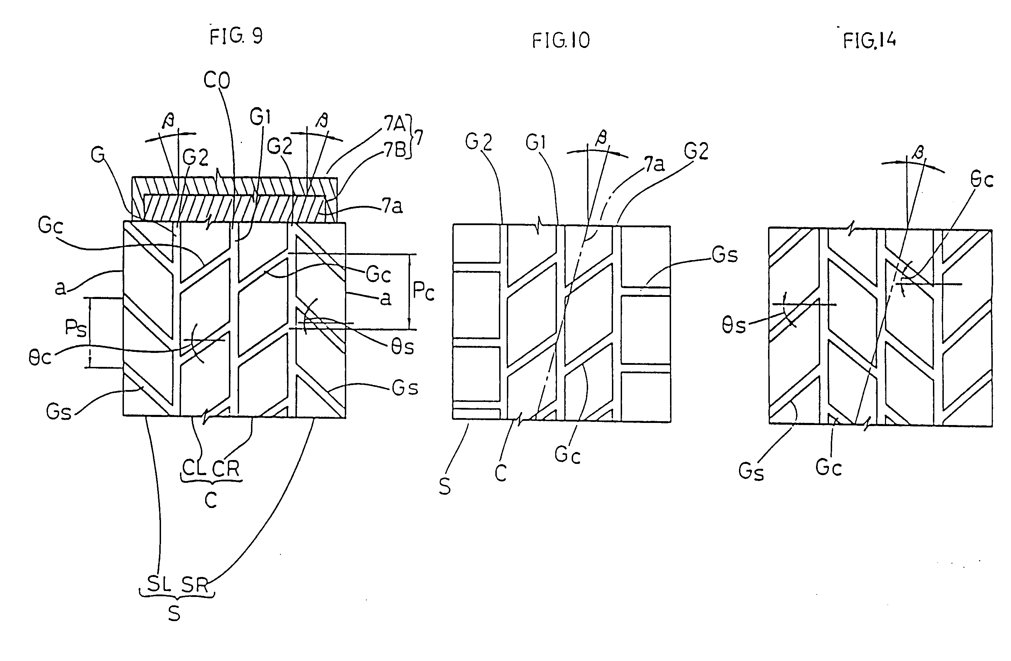

In Figs 1 and 9, a pneumatic radial tyre 1 of the first invention comprises a carcass 6 extending from a tread part 2 through a side-wall part 3 to a bead part 4 and wrapped around a bead core 5 in each bead a belt 7 is placed radially outside the carcass 6 and inside the tread part 2.

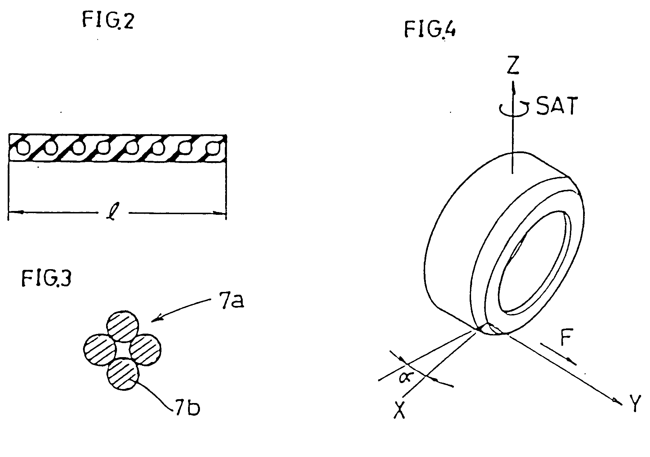

The belt 7 comprises belt plies 7A and 7B of two inside and outside layers whose cords are inclined in mutually reverse directions at an inclination angle (β) of not more than 18 degrees to the tyres equator CO of the belt cords. The outermost belt ply cords of the outside belt ply 7A in the embodiment are inclined in the right upper direction to the tyres equator CO as shown in Fig.9. For belt cords 7a, as shown for example in Fig.3 twisted steel filaments 7b in 2 + 7 x 0.22, 1 x 5 x 0.23 or 1 x 4 x 0.22 relationship may be used.

In the right and left outside areas SL, SR outer lateral grooves Gs with an inclination angle (Θs) of 40 degrees or less to the direction of the tyre axis which is opposite to the inclination of the outside belt cords 7a are constructed at spacings in the direction of the tyres equator CO. In the right and left inside area CL, CR inner lateral grooves Gc with an inclination angle (Θc) of 40 degrees or less to the direction of the tyres axis inclined in the right upper direction the same as the outside belt cords 7A are provided. If the inclination exceeds the inclination angle (Θs) of the lateral grooves Gs, a pattern noise tends to be generated. In the case that the inclination (Θc) of the inner horizontal grooves Gc exceeds 40 degrees, the cornering force upon turning tends to be reduced, and the steering stability tends to be deteriorated.

The circumferential pitches Ps and Pc which are the distances between the outer and inner grooves GS and Gc in the direction of tyres equator CO are set at 40 mm or less respectively, preferably at 20mm or less.

As described above the residue CF can be improved by forming the outer grooves Gs to be reversely inclined to the outside belt cords 7A in the right and left outside areas, SL, SR and the inner grooves Gc to be inclined to the same direction in the right and left inside areas, CR, CL. It is confirmed that the residue CF can be further reduced by setting the circumferential pitches Pc and Ps preferably at 20mm or less.

Fig.10 shows another embodiment where the inclination angle (Θs) of the outer grooves Gs is set at 0.

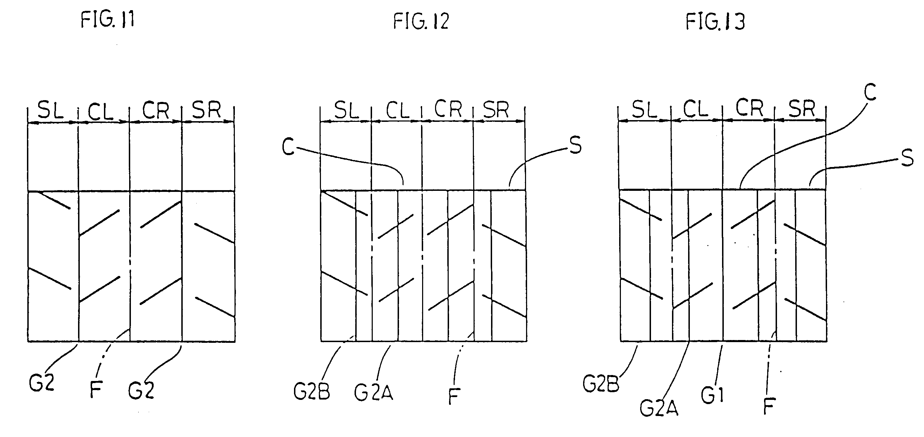

Figs 9, 10 show embodiments where the grooves G1 and G2 are constructed respectively in the parts that section the inside area C and the outside area S, while in the case that two main grooves G2 are employed, as shown in Fig.11, or in the case that four or more main grooves G2A, and G2B are employed spaced laterally at regular intervals as shown in Figs 11 to 13 the inside area C and the outside area S are considered to be sectioned by a virtual line F on the rib. At least one end of the inner circumferential groove Gc is open to the circumferential main grooves G. For the belt cord, the same material as used in the first invention can be employed. However, by setting the cord quantity N S at 18.0 or more, the hoop effect of the belt 7 is increased, and thus, the steering stability is improved. It is the same in the fourth and fifth inventions as well.

Figs 1 & 15 show in the right and left outside areas S, SR, SL outer lateral grooves GS which extend in the direction of the tyres equator (CO) with the main part GS1 having a length exceeding 70% of the lateral width of the outside area S in the direction of the tyres axis. the main part Gsl is inclined at an angle (Θs) of 40 degrees or less to the direction of the tyre axis and reversely to the outside belt cords 7a.

A short sub part Gs2 extends outwardly in the direction of the tyre axis to the edge a of the tread part 2. If the inclination angle (Θs) of the outer lateral grooves Gs exceeds 40 degrees a pattern noise tends to be generated.

In the tread part 2, main grooves G2A are formed on c on either side of the tyres equator CO, and other extending side grooves G2B and G2B are also formed to extend continuously in the direction of the tyres equator in the parts that divide the inside area C and the outside area S from one another.

The circumferential groove C shows as vertical in the Figure 16 may be straight grooves or zigzag grooves.

In the inside area C, an inner groove GcA comprises an inner groove part GcA1 extending inwards from the main groove G2A with a inner end ending near the equator of the tyre CO and an outer groove part GcA2 extending outwardly in the direction of tyre axis. Moreover, inner grooves GcB extending from the vertical groove G2B respectively to the inside of the tyre are also arranged parallel to the direction of the tyre circumference. The inner groove GcA and GcB are both inclined in the same direction as the outside belt cords 7a. By setting the inclination angle (Θc) to the direction of the tyre axis at 35 degrees or less, the cornering force when the slip angle (α) is 1 degree is prevented from deteriorating, and the steering stability on turning the vehicle is prevented from being reduced.

The circumferential pitch Pc of the inner grooves Gc is set at 40 mm or less, preferably at 20mm or less. In addition, by setting the circumferential pitch Ps of the outer horizontal grooves Gs at 20mm or less, the residue CF is reduced.

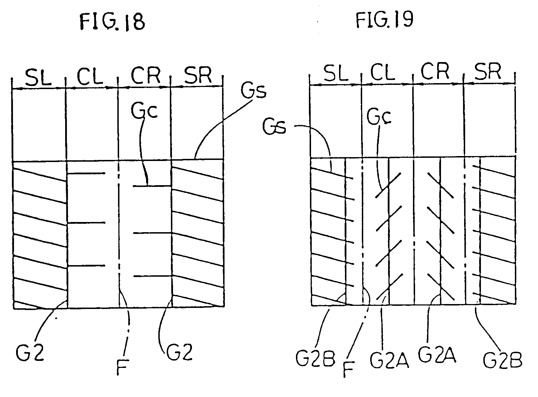

Where the two main grooves G2 and G2 are at regular intervals as shown in Fig 18, or four grooves G2A and G2B are at regular intervals as shown in Fig.19 the inside areas C and the outside area Ss are delineated by virtual lines F on the ribs. At least one end of the inner grooves Gc opens into the vertical grooves G, and at least one end of the outer grooves Gs opens at the edge a of the tread part or into vertical grooves G.

As a working example a prototype tyre having a size of 175/70R13 was produced and the ride comfort and the residue CF were measured. For the belt cords, steel cords of 1 x 4 x 0.22 were used. the belt was formed in two plies. The test was performed by mounting the tyre on a rim 5J x 13 setting the internal pressure at 2.0 kg/sq.cm, the load at 300 kg and using a flat track tyre test machine supplied by MTS company, USA to measure the residue CF. The residue CF is shown by a residue CF index setting the index of the comparison example at 100 in Table 1 etc. The smaller the residue of Index is, the more preferable the result is. In regard to the ride comfort, by mounting the tyre on a 2,000 cc passenger car, a feel test was conducted by a driver, and an evaluation was made by setting the comparison examples at 100 points. Higher scores show better ride comfort.

In regard to the invention of a tyre as shown in Table 1, Figs 9 and 10 was produced. The results are also shown in the Table. Another tyre having the pattern shown in Fig.14 was also produced for the purpose of comparison.

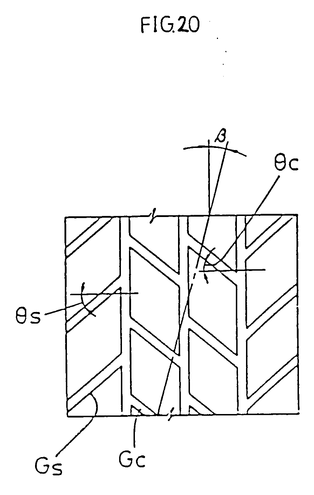

Also in regard to the invention, a tyre as shown in Table 2 and Fig.15 was produced. As a comparative example, another tyre having the pattern shown in Fig.20 was also produced. The results are shown in the Table 2.

Thus, the invention can improve the one-side drifting of a car without sacrificing steering stability.

**Table 1**

| | Em.1-1 | Em. 1-2 | Co. 1-1 |
|---|---|---|---|
| Pattern | Fig. 9 | Fig. 10 | Fig. 14 |
| Belt cord | | | |
| Material | Steel | Steel | Steel |
| Number of plies | 2 | 2 | 2 |
| Cord | 1 × 4 × 0.22 | 1 × 4 × 0.22 | 1 × 4 × 0.22 |
| N × S | 20.5 | 20.5 | 20.5 |
| Direction of outside belt cord | Right upper | Right upper | Right upper |
| Inclination angle | 16 | 16 | 16 |

| Inner lateral groove | | | |
|---|---|---|---|
| Inclination angle (θc) | 30 | 30 | 30 |
| Direction | Right upper | Right upper | Left upper |
| Circumferential pitch Pc (mm) | 18 | 18 | 18 |

| Outer lateral groove | | | |
|---|---|---|---|
| Inclination angle (θs) | 30 | 30 | 30 |
| Direction | Left upper | Left upper | Right upper |
| Circumferential pitch Ps (mm) | 18 | 18 | 18 |
| Steering of outside belt cord | 110 | 105 | 100 |
| Residue CF index | 5 | 26 | 100 |
| Em. ; Embodiment CO. ; Comparative example | | | |

**Table 2**

| | Em. 2-1 | Em. 2-2 | Co. 2-1 | Co. 2-2 | Co. 2-3 |
|---|---|---|---|---|---|
| Pattern | Fig. 15 | Fig. 15 | Fig. 15 | Fig. 15 | Fig.20 |
| Belt cord | | | | | |
| Material | Steel | Steel | Steel | Steel | Steel |
| Number of plies | 2 | 2 | 2 | 2 | 2 |
| Cord | 1 × 4 × 0.22 | 1 × 4 × 0.22 | 1× 4 × 0.22 | 1 × 4 × 0.22 | 1 × 4 × 0.22 |
| N × S | 20.5 | 20.5 | 20.5 | 20.5 | 20.5 |
| Direction of outside belt cord | Right upper | Right upper | Right upper | Right upper | Right upper |
| Inclination angle | 18 | 18 | 18 | 18 | 18 |

| Inner lateral groove | | | | | |
|---|---|---|---|---|---|
| Inclination angle (θc) | 25 | 25 | 25 | 25 | 30 |
| Direction | Right upper | Right upper | Right upper | Right upper | Left upper |
| Circumferential pitch Pc (mm) | 18 | 18 | 18 | 18 | 18 |

| Outer lateral groove | | | | | |
|---|---|---|---|---|---|
| Inclination angle (θs) | 40 | 40 | 40 | 40 | 30 |
| Direction | Left upper | Left upper | Left upper | Left upper | Right upper |
| Circumferential pitch Ps (mm) | 15 | 20 | 30 | 40 | 18 |
| Steering of stability | 110 | 105 | 100 | 100 | 100 |
| Residue CF index | 24 | 26 | 39 | 49 | 100 |
| Em. ; Embodiment CO. ; Comparative example | | | | | |

## Claims

1. A belted radial tyre comprising a pair of bead cores (5) each disposed in each bead part (4), a carcass (6) turned up around the bead cores, a belt (7) disposed radially outside the carcass and inside a tread part (2), and at least two circumferential grooves in said tread part, wherein the tread part (2) is provided with three circumferential lines of demarcation to define four equal-width axial sections (SR,CR,CL,SL) which are a pair of right and left axially inner sections (CR,CL) one on each side of the tyre equator and a pair of right and left axially outer sections (SR,SL) axially outward of the right and left inner sections, respectively, characterised by said tread part provided in the paired outer sections (SR and SL) with inclined lateral straight grooves (Gs), said belt (7) comprising two plies (7A,7B) of parallel steel cords laid at an angle of not more than 18 degrees with respect to the tyre equator wherein at least the radially outermost belt ply extends into the paired outer sections (SR and SL) across the tread part, the lateral straight grooves (Gs) inclined at an angle of not more than 40 degrees with respect to the tyre axial direction to the opposite direction to the cords of the outermost belt ply, the length of each said lateral straight groove (Gs) being more than 70% of the width of the outer sections (SR,SL), the circumferential pitches (Ps) of the lateral straight grooves (Gs) in each section (SR,SL) being not more than 20mm.

2. A tyre according to claim 1 characterised in that said tread part provided in the paired inner sections (CR and CL) with lateral straight grooves (Gc) inclined at an angle of not more than 40 degrees with respect to the tyre axial direction to the same direction as the cords of the outermost belt ply, and the circumferential pitches of the lateral straight grooves (Gc) in each inner section being not more than 20mm.

3. A tyre according to claim 1 or 2 characterised in that said at least two circumferential grooves are straight grooves which are located on said circumferential lines of demarcation, and each said inclined lateral straight groove (Gs,Gc) has at least one end connected to one circumferential groove.

4. A tyre according to claim 1 or 2 characterised in that said at least two circumferential grooves are straight grooves which are not located on said circumferential lines of demarcation, and each said inclined lateral straight groove (Gs,Gc) is crossed by one circumferential groove.

5. A tyre according to any one of the preceding claims characterised in that each said inclined lateral straight groove (Gs1) in the outer sections (SR and SL) is provided at the axially outer end with an extended part (Gs2) with a different inclination extending to the tread edge.

6. A tyre according to any one of the preceding claims characterised in that each said belt ply has a cord quantity of more than 18, the cord quantity defined as the total of the cross sectional areas (sq.mm) of the steel cords (7a) per 10cm ply width in a right angled direction to the steel cords.

## Patentansprüche

1. Ein mit einem Gürtel versehener Radialreifen mit einem Paar von Wulstkernen (5), die jeweils in einem Wulstteil (4) angeordnet sind, einer Karkasse (6), die um die Wulstkerne nach oben umgeschlagen ist, einem Gürtel (7), der radial außerhalb der Karkasse und innerhalb eines Laufflächenteils (2) angeordnet ist, und wenigstens zwei Umfangsnuten im Laufflächenteil, wobei der Laufflächenteil (2) mit drei Umfangsdemarkationslinien versehen ist, um vier gleichbreite axiale Abschnitte (SR, CR, CL, SL) zu definieren, die ein Paar von rechten und linken axial inneren Abschnitten (CR, CL), einer auf jeder Seite des Reifenäquators, und ein Paar von rechten und linken axial äußeren Abschnitten (SR, SL) axial außerhalb der rechten bzw. linken inneren Abschnitte sind,
dadurch **gekennzeichnet,**
daß der Laufflächenteil in den gepaarten äußeren Abschnitten (SR und SL) mit geneigten lateralen geraden Nuten (Gs) versehen ist, der Gürtel (7) zwei Lagen (7A, 7B) paralleler Stahlkorde umfaßt, die unter einem Winkel von nicht mehr als 18 Grad bezüglich des Reifenäquators gelegt sind, wenigstens die radial äußerste Gürtellage sich in die gepaarten äußeren Abschnitte (SR und SL) über den Laufflächenteil hinweg erstreckt, die lateralen geraden Nuten (Gs) unter einem Winkel von nicht mehr als 40 Grad bezüglich der Reifenaxialrichtung in die entgegengesetzte Richtung bezüglich der Korde der äußersten Gürtellage geneigt sind, die Länge jeder lateralen geraden Nut (Gs) mehr als 70% der Breite der äußeren Abschnitte (SR, SL) beträgt, und die Umfangsteilungen (Ps) der lateralen geraden Nuten (Gs) in jedem Abschnitt (SR, SL) nicht mehr als 20mm betragen.

2. Ein Reifen nach Anspruch 1,
dadurch **gekennzeichnet,**
daß der Laufflächenteil in den gepaarten inneren Abschnitten (CR und CL) mit lateralen geraden Nuten (Gc) versehen ist, die unter einem Winkel von nicht mehr als 40 Grad bezüglich der Reifenaxialrichtung in dieselbe Richtung wie die Korde der äußersten Gürtellage geneigt sind, und die Umfangsteilungen der lateralen geraden Nuten (Gc) in jedem inneren Abschnitt nicht mehr als 20mm betragen.

3. Ein Reifen nach Anspruch 1 oder 2,
dadurch **gekennzeichnet,**
daß die wenigstens zwei Umfangsnuten gerade Nuten sind, die auf den Umfangsdemarkationslinien liegen, und jede geneigte laterale gerade Nut (Gs, Gc) wenigstens ein Ende aufweist, das mit einer Umfangsnut verbunden ist.

4. Ein Reifen nach Anspruch 1 oder 2,
dadurch **gekennzeichnet,**
daß die wenigstens zwei Umfangsnuten gerade Nuten sind, die nicht auf den Umfangsdemarkationslinien liegen, und jede geneigte laterale gerade Nut (Gs, Gc) von einer Umfangsnut gekreuzt ist.

5. Ein Reifen nach einem der vorhergehenden Ansprüche,
dadurch **gekennzeichnet,**
daß jede geneigte laterale gerade Nut (Gs1) in den äußeren Abschnitten (SR und SL) am axial äußeren Ende mit einem erweiterten Teil (Gs2) mit einer anderen Neigung versehen ist, der sich zur Laufflächenkante erstreckt.

6. Ein Reifen nach einem der vorhergehenden Ansprüche,
dadurch **gekennzeichnet,**
daß jede Gürtellage eine Kordquantität von mehr als 18 aufweist, wobei die Kordquantität definiert ist als die Gesamtheit der Querschnittsflächen (mm²) der Stahlkorde (7a) pro 10cm Lagenbreite in einer Richtung senkrecht zu den Stahlkorden.

## Revendications

1. Pneumatique à carcasse radiale et à ceinture, comprenant deux tringles (5) disposées chacune dans une partie de talon (4), une carcasse (6) repliée autour des tringles, une ceinture (7) placée radialement à l'extérieur de la carcasse et à l'intérieur par rapport à la partie de bande de roulement (2), et au moins deux gorges circonférentielles formées dans la bande de roulement, dans lequel la partie de bande de roulement (2) possède trois lignes circonférentielles de démarcation destinées à délimiter quatre sections axiales (SR, CR, CL, SL) de même largeur qui comportent une paire de sections axialement internes droite et gauche (CR, CL) de chaque côté de l'équateur du pneumatique et une paire de sections axialement externes droite et gauche (SR, SL) placées axialement à l'extérieur des sections internes droite et gauche respectivement, caractérisé en ce que la partie de bande de roulement comporte, dans les sections externes appariées (SR et SL) des gorges rectilignes latérales inclinées (Gs), la ceinture (7) comprenant deux nappes (7A, 7B) de câblés parallèles d'acier faisant un angle qui ne dépasse pas 18° avec l'équateur du pneumatique, la nappe de ceinture radialement la plus externe au moins s'étendant dans la paire de sections externes (SR et SL) transversalement à la partie de bande de roulement, les gorges rectilignes latérales (Gs) étant inclinées d'un angle ne dépassant pas 40° par rapport à la direction axiale du pneumatique du côté opposé de celui des câblés de la nappe externe de ceinture, la longueur de chacune des gorges rectilignes latérales (Gs) ne dépassant pas 70 % de la largeur des sections axiales (SR, SL), les pas circonférentiels (Ps) des gorges rectilignes latérales (Gs) de chaque section (SR, SL) ne dépassant pas 20 mm.

2. Pneumatique selon la revendication 1, caractérisé en ce que la partie de bande de roulement comporte, dans la paire de sections internes (CR et CL), des gorges rectilignes latérales (Gc) inclinées d'un angle qui ne dépasse pas 40° par rapport à la direction axiale du pneumatique, dans le même sens que dans les câblés de la nappe externe de ceinture, et les pas circonférentiels des gorges rectilignes latérales (Gc) de chaque section interne ne dépassent pas 20 mm.

3. Pneumatique selon la revendication 1 ou 2, caractérisé en ce que deux gorges circonférentielles au moins sont des gorges rectilignes qui sont placées sur les lignes circonférentielles de démarcation, et chaque gorge rectiligne latérale inclinée (Gs, Gc) a au moins une extrémité raccordée à une gorge circonférentielle.

4. Pneumatique selon la revendication 1 ou 2, caractérisé en ce que les deux gorges circonférentielles au moins sont des gorges rectilignes qui ne sont pas placées sur les lignes circonférentielles de démarcation, et chaque gorge rectiligne latérale inclinée (Gs, Gc) est recoupée par une gorge circonférentielle.

5. Pneumatique selon l'une quelconque des revendications précédentes, caractérisé en ce que chaque gorge rectiligne latérale inclinée (Gs1), dans les sections externes (SR et SL), comporte, à l'extrémité axialement externe, une partie prolongée (Gs2) ayant une inclinaison différente et dirigée vers le bord de la bande de roulement.

6. Pneumatique selon l'une quelconque des revendications précédentes, caractérisé en ce que chaque nappe de ceinture a une quantité de câblés ne dépassant pas 18, la quantité de câblés étant définie comme étant le produit de la somme des sections (mm²) des câblés d'acier (7a) par largeur de 10 cm de nappe en direction perpendiculaire aux câblés d'acier.
